# EUROPEAN PATENT APPLICATION

(11) **EP 1 997 844 A1**
(43) Date of publication of application: **03.12.2008**
(21) Application number: 07738758.7
(22) Date of filing: 09.03.2007
(51) Int. Cl.: C08G 61/00

(54) **METHOD FOR PRODUCTION OF CONJUGATED POLYMER**

(30) Priority: 13.03.2006 JP 2006067125
(71) Applicant: Sumitomo Chemical Company, Limited, Tokyo 104-8260 (JP)
(72) Inventor: ODA, Seiji, Ibaraki-shi, Osaka 567-0841 (JP); KAMIKAWA, Takashi, Nara-shi, Nara 630-8442 (JP)
(74) Representative: Vossius & Partner
(86) International application number: PCT/JP2007/055311
(87) International publication number: WO 2007/105807

(57) **Abstract**

A method for production of a conjugated polymer comprising contacting (A) an aromatic monomer having at least two boron-containing functional groups with an aromatic monomer having at least two reactive functional groups or (B) aromatic monomers having at least one boron-containing functional group and at least one reactive functional group with each other, both in an ether solvent in the presence of a palladium catalyst wherein a phosphine compound is coordinated to palladium, cesium carbonate and 1 to 100 moles of water per 1 mole of the boron-containing functional group of the above-mentioned aromatic monomer.

## Description

### Technical Field

The present invention relates to a method for production of a conjugated polymer.

### Background Art

Conjugated polymers are polymers possessing a delocated π-electron system in a part of or all of the polymer main chain, and they are used, for example, for production of an optical device and the like.

A method comprising reacting an aromatic boronic acid compound with an aromatic halide in the presence of a solvent, a water-soluble inorganic base and a palladium catalyst to produce the corresponding biphenyl compound has been known as "The Suzuki coupling reaction" (e.g. Synthetic, Communications, 11(7), 513, 1981), and methods for producing a conjugated polymer using the Suzuki coupling reaction have been known. For example, US Patent No. 5777070 discloses a method for production of a conjugated polymer using an aqueous sodium carbonate solution and a phase-transfer catalyst. However, since the phase-transfer catalyst is used, the isolation process of the obtained conjugated polymer is cumbersome. Alternatively, Macromolecules 2003, vol.36, 8986-8991 discloses a method for production of a conjugated polymer using an aqueous potassium carbonate solution. However, there is a problem that many of the obtained conjugated polymers have weight-average molecular weight (Mw) of 10,000 or less and it is difficult to obtain a conjugated polymer having high molecular weight. Further, although US Patent No. 694929 discloses a method for production of a conjugated polymer using an aqueous cesium carbonate solution, the obtained conjugated polymer has weight-average molecular weight (Mw) of about 14,000 and it is low.

### Disclosure of the Invention

The present invention provides
<1> A method for production of a conjugated polymer comprising contacting (A) an aromatic monomer having at least two boron-containing functional groups with an aromatic monomer having at least two reactive functional groups or (B) aromatic monomers having at least one boron-containing functional group and at least one reactive functional group with each other, both in an ether solvent in the presence of a palladium catalyst wherein a phosphine compound is coordinated to palladium, cesium carbonate and 1 to 100 moles of water per 1 mole of the boron-containing functional group of the above-mentioned aromatic monomer;
<2> The method for production of a conjugated polymer according to <1>, wherein the ether solvent is an aliphatic ether solvent;
<3> The method for production of a conjugated polymer according to <2>, wherein the aliphatic ether solvent is tetrahydrofuran;
<4> The method for production of a conjugated polymer according to any one of <1> to <3>, wherein the phosphine compound is a phosphine compound wherein at least one alkyl group is bonded to a phosphorus atom;
<5> The method for production of a conjugated polymer according to <4>, wherein the phosphine compound wherein at least one alkyl group is bonded to a phosphorus atom is a trialkylphosphine represented by the formula (I): 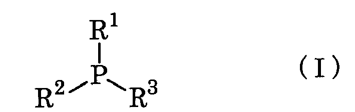 wherein R¹, R² and R³ each independently represents a C1-C30 alkyl group;
<6> The method for production of a conjugated polymer according to <5>, wherein the trialkylphosphine represented by the formula (I) is tricyclohexylphosphine;
<7> The method for production of a conjugated polymer according to any one of <4> to <6>, wherein the contact is conducted in the presence of 1 to 75 moles of water per 1 mole of the boron-containing functional group of the aromatic monomer;
<8> The method for production of a conjugated polymer according to any one of <4> to <6>, wherein the contact is conducted in the presence of 1 to 45 moles of water per 1 mole of the boron-containing functional group of the aromatic monomer;
<9> The method for production of a conjugated polymer according to any one of <1> to <3>, wherein the phosphine compound is a phosphine compound wherein three substituted or unsubstituted aryl groups are bonded to a phosphorus atom;
<10> The method for production of a conjugated polymer according to <9>, wherein the phosphine compound wherein three substituted or unsubstituted aryl groups are bonded to a phosphorus atom is a triarylphosphine represented by the formula (II): 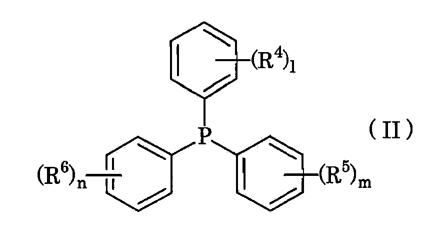 wherein R⁴, R⁵ and R⁶ each independently represents a halogen atom, a C1-C20 alkyl group, a C1-C20 alkoxy group or a C6-C20 aryl group, 1, m and n each independently an integer of 0 to 5, and when 1 represents an integer of 2 or more, R⁴s may be different from each other, when m represents an integer of 2 or more, R⁵s may be different from each other, and when n represents an integer of 2 or more, R⁶s may be different from each other;
<11> The method for production of a conjugated polymer according to <10>, wherein the phosphine compound represented by the formula (II) is triphenylphosphine or tris(4-methylphenyl)phosphine;
<12> The method for production of a conjugated polymer according to any one of <9> to <11>, wherein the contact is conducted in the presence of 1 to 25 moles of water per 1 mole of the boron-containing functional group of the aromatic monomer;
<13> The method for production of a conjugated polymer according to any one of <1> to <12>, wherein the aromatic monomer having at least two boron-containing functional groups, the aromatic monomer having at least two reactive functional groups and the aromatic monomer having at least one boron-containing functional group and at least one reactive functional group is any of aromatic monomers represented by the formulae (1) to (16): 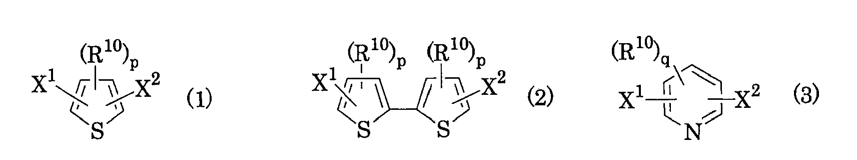 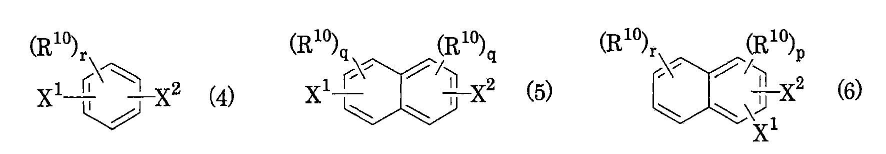 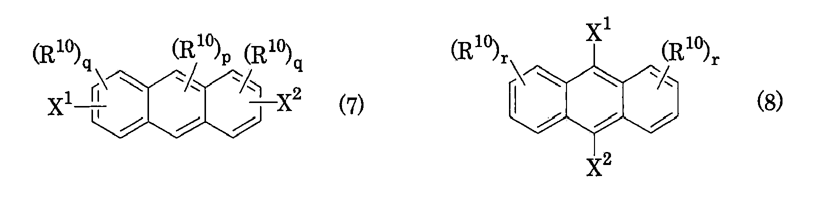 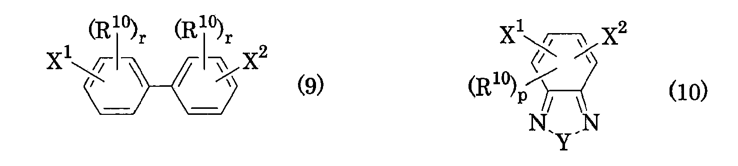 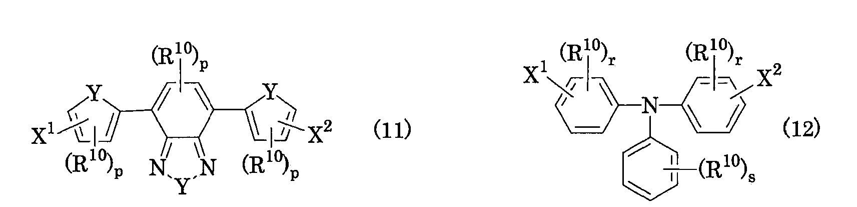 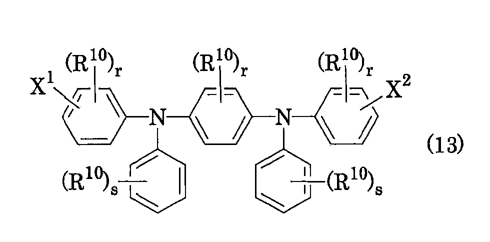 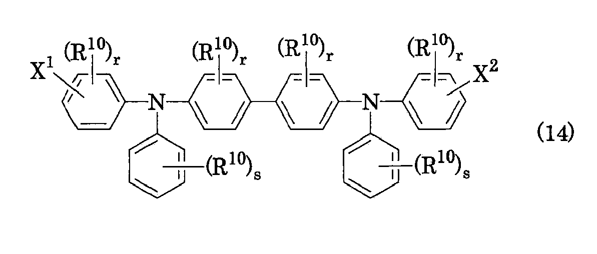 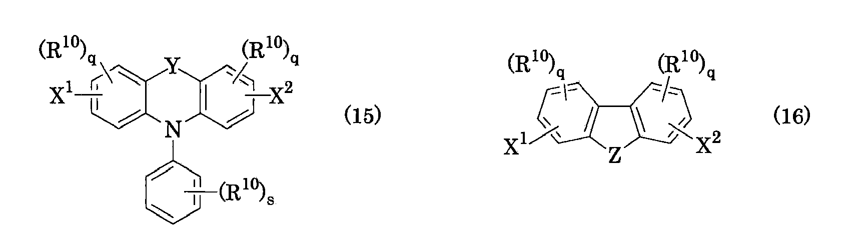 wherein X¹ and X² each independently represents a boron-containing functional group or a reactive functional group, R¹⁰ represents an uninvolved group in the reaction, p represents an integer of 0 to 2, q represents an integer of 0 to 3, r represents an integer of 0 to 4, s represents an integer of 0 to 5, and when multiple R¹⁰s exist, R¹⁰s may be different from each other, and two R¹⁰s bonded to the neighboring carbon atoms of the aromatic ring may be bonded each other to form a ring together with the carbon atoms to which they are bonded, Y represents an element of the 16 group in the periodic table, and Z represents -O-, -S-, -N(R²⁰)- or 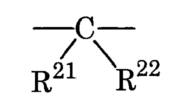 wherein R²⁰ , R²¹ and R²² each independently represents a hydrogen atom or an uninvolved group in the reaction;
<14> The method for production of a conjugated polymer according to any one of <1> to <13>, wherein the reactive functional group is a chlorine atom, a bromine atom or an iodine atom;
<15> The method for production of a conjugated polymer according to any one of <1> to <14>, wherein the boron-containing functional group is any group of 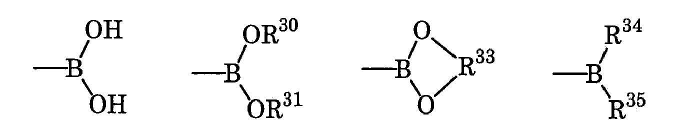 wherein R³⁰, R³¹, R³⁴ and R³⁵ each independently represents a C1-C6 substituted or unsubstituted alkyl group and R³³ represents a divalent hydrocarbon group;
<16> The method for production of a conjugated polymer according to <15>, wherein the divalent hydrocarbon group is a C2-C6 alkylene group;
<17> The method for production of a conjugated polymer according to <16>, wherein the C2-C6 alkylene group is an ethane-1,2-diyl group, a propane-1,3-diyl group, a 2,2-dimethylpropane-1,3-diyl group or a 2,3-dimethylbutane-2,3-diyl group.

### Best Mode for Carrying Out the Present Invention

The methods for production of the present invention are a method comprising contacting (A) an aromatic monomer having at least two boron-containing functional groups (hereinafter, simply referred to as the aromatic monomer M¹) with an aromatic monomer having at least two reactive functional groups (hereinafter, simply referred to as the aromatic monomer M²) in an ether solvent in the presence of a palladium catalyst wherein a phosphine compound is coordinated to palladium, cesium carbonate and 1 to 100 moles of water per 1 mole of the boron-containing functional group of the above-mentioned aromatic monomer to produce a conjugated polymer and a method comprising contacting (B) aromatic monomers having at least one boron-containing functional group and at least one reactive functional group (hereinafter, simply referred to as the aromatic monomer M³) with each other in an ether solvent in the presence of a palladium catalyst wherein a phosphine compound is coordinated to palladium, cesium carbonate and 1 to 100 moles of water per 1 mole of the boron-containing functional group of the above-mentioned aromatic monomer to produce a conjugated polymer.

As the boron-containing functional group of the aromatic monomer M¹, any of groups represented by the followings: 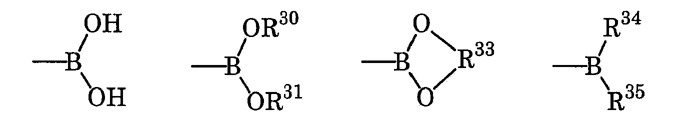 wherein R³⁰, R³¹, R³⁴ and R³⁵ each independently represents a C1-C6 substituted or unsubstituted alkyl group and R³³ represents a divalent hydrocarbon group is exemplified.

Among them, a group represented by the following: 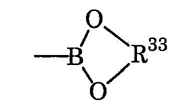 is preferable.

As R³⁰, R³¹, R³⁴ and R³⁵, a C1-C6 unsubstituted alkyl group is preferable.

Examples of the C1-C6 unsubstituted alkyl group include a C1-C6 linear, branched or cyclic unsubstituted alkyl group such as a methyl group, an ethyl group, a propyl group, an isopropyl group, a butyl group, an isobutyl group, a sec-butyl group, a tert-butyl group, a pentyl group, a neopentyl group, a hexyl group, a cyclopentyl group and a cyclohexyl group. Examples of the substituent of the alkyl group include a C1-C6 alkoxy group such as a methoxy group and an ethoxy group, and a C6-C12 aryl group such as a phenyl group.

Examples of the divalent hydrocarbon group include a C2-C6 alkylene group such as an ethane-1,2-diyl group, a propane-1,3-diyl group, a 2,2-dimethylpropane-1,3-diyl group and a 2,3-dimethylbutane-2,3-diyl group, a C6-C12 arylene group such as a 1, 2-phenylene group and a 1, 3-phenylene group, and the C2-C6 alkylene group is preferable.

The aromatic monomer M¹ may be a monomer having at least two boron-containing functional groups and one or more aromatic rings, and a monomer having two boron-containing functional groups and one to six aromatic rings is preferable. When the aromatic monomer M¹ is a monomer having two or more aromatic rings, the boron-containing functional groups may be bonded to the same aromatic ring or different aromatic rings.

Examples of the reactive functional group of the aromatic monomer M² include a halogen atom such as a chlorine atom, a bromine atom and an iodine atom, an alkanesulfonyl group which may be substituted with a halogen atom such as a trifluoromethanesulfonyl group and a methanesulfonyl group and an arylsulfonyl group such as a benzenesulfonyl group and a p-toluenesulfonyl group, and the halogen atom is preferable.

The aromatic monomer M² may be a monomer having at least two reactive functional groups and one or more aromatic rings, and a monomer having two reactive functional groups and one to six aromatic rings is preferable. When the aromatic monomer M² is a monomer having two or more aromatic rings, the reactive functional groups may be bonded to the same aromatic ring or different aromatic rings.

Examples of the boron-containing functional group include the same as described in the above-mentioned boron-containing functional group of the aromatic monomer M¹. Examples of the reactive functional group include the same as described in the above-mentioned reactive functional group of the aromatic monomer M²_{.}

The aromatic monomer M³ may be a monomer having at least one boron-containing functional group, at least one reactive functional group and one or more aromatic rings, and a monomer having one boron-containing functional group, one reactive functional group and one to six aromatic rings is preferable. When the aromatic monomer M³ is a monomer having two or more aromatic rings, the boron-containing functional group and the reactive functional groups may be bonded to the same aromatic ring or different aromatic rings.

Examples of the aromatic rings contained in the aromatic monomer M¹, the aromatic monomer M² and the aromatic monomer M³ include a benzene ring; a refused aromatic ring such as a naphthalene ring, an anthracene ring and a fluorene ring; and a heteroaromatic ring such as a furan ring, a thiophene ring, a pyridine ring, a phenoxazine ring, a phenothiazine ring and a benzothiadiazole ring.

Specific examples of the aromatic monomer M¹, the aromatic monomer M² and the aromatic monomer M³ include aromatic monomers represented by the following formulae (1) to (16): 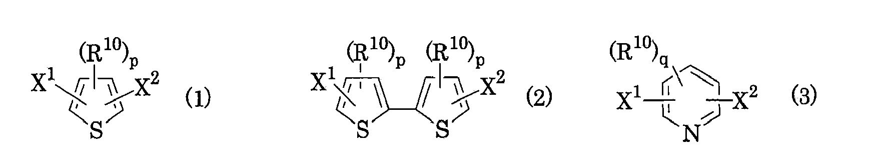 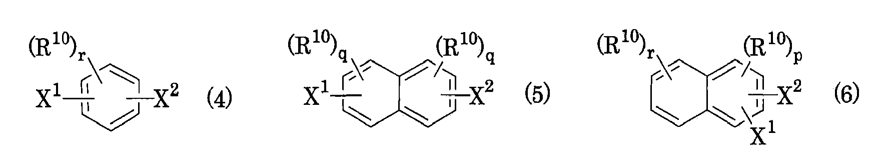 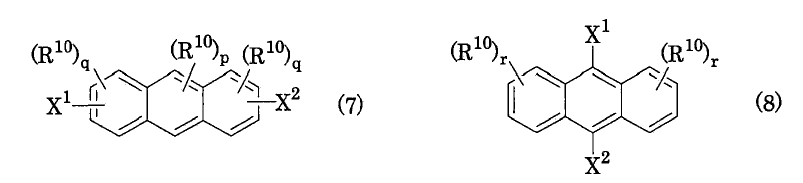 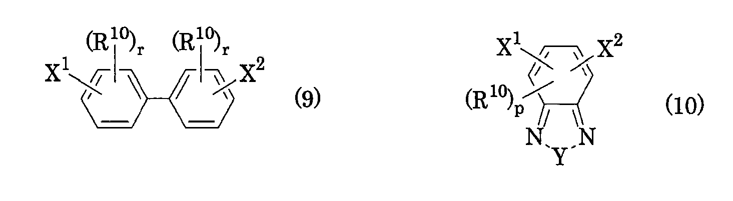 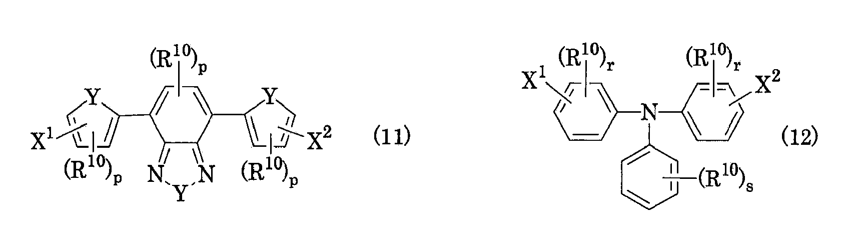 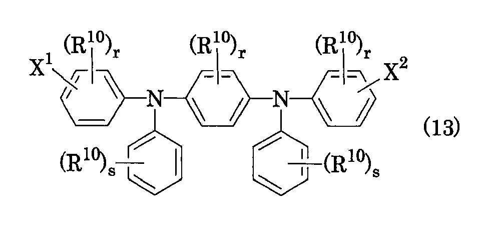 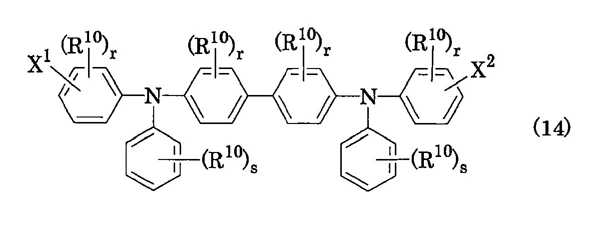 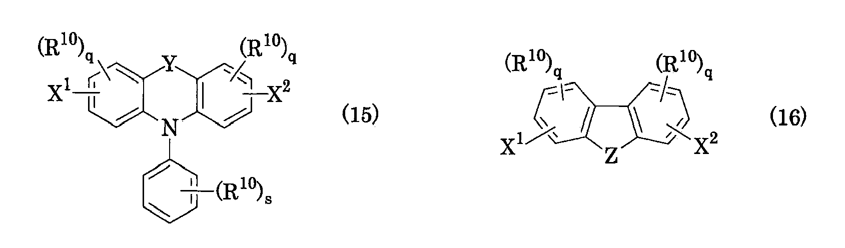 wherein X¹ and X² each independently represents a boron-containing functional group or a reactive functional group, R¹⁰ represents an uninvolved group in the reaction, p represents an integer of 0 to 2, q represents an integer of 0 to 3, r represents an integer of 0 to 4, s represents an integer of 0 to 5, and when multiple R¹⁰s exist, R¹⁰s may be different from each other, and two R¹⁰s bonded to the neighboring carbon atoms of the aromatic ring may be bonded each other to form a ring together with the carbon atoms to which they are bonded, Y represents an element of the 16 group in the periodic table, and Z represents -O-, -S-, -N(R²⁰)- or 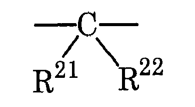 wherein R²⁰, R²¹ and R²² each independently represents a hydrogen atom or an uninvolved group in the reaction.

Examples of the uninvolved group in the reaction include a C1-C20 linear, branched or cyclic alkyl group such as a methyl group, an ethyl group, a propyl group, an isopropyl group, a butyl group, an isobutyl group, a tert-butyl group, a pentyl group, a hexyl group, an octyl group, a decyl group, a dodecyl group, a cyclopentyl group and a cyclohexyl group, a C1-C20 linear, branched or cyclic alkoxy group such as a methoxy group, an ethoxy group, a propoxy group, an isopropoxy group, a butoxy group, an isobutoxy group, a tert-butoxy group, a pentyloxy group, a hexyloxy group, an octyloxy group, a decyloxy group, a dodecyloxy group, a cyclopentyloxy group and a cyclohexyloxy group, a C6-C20 aryl group such as a phenyl group and a 4-methylphenyl group, a C2-C20 alkoxycarbonyl group such as a methoxycarbonyl group and an ethoxycarbonyl group, a C6-C20 aryloxy group such as a phenoxy group, and a C2-C20 acyl group such as an acetyl group, a propionyl group and a benzoyl group.

Examples of the element of the 16 group in the periodic table include oxygen, sulfur and selenium.

Examples of the aromatic monomer M¹ include
2,2'-(9,9-dihexyl-9H-fluorene-2,7-diyl)bis(1,3,2-dioxaborol ane),
2,2'-(9,9-dihexyl-9H-fluorene-2,7-diyl)bis(1,3,2-dioxaborin ane),
2,2'-(9,9-dihexyl-9H-fluorene-2,7-diyl)bis(4,4,5,5-tetramet hyl-1,3,2-dioxaborolane),
2,2'-(9,9-dihexyl-9H-fluorene-2,7-diyl)bis(5,5-dimethyl-1,3 ,2-dioxaborinane),
2,2'-(9,9-dioctyl-9H-fluorene-2,7-diyl)bis(1,3,2-dioxaborol ane),
2,2'-(9,9-dioctyl-9H-fluorene-2,7-diyl)bis(1,3,2-dioxaborin ane),
2,2'-(9,9-dioctyl-9H-fluorene-2,7-diyl)bis(4,4,5,5-tetramet hyl-1,3,2-dioxaborolane),
2,2'-(9,9-dioctyl-9H-fluorene-2,7-diyl)bis(5,5-dimethyl-1,3 ,2-dioxaborinane),
2,2'-(9,9-didodecyl-9H-fluorene-2,7-diyl)bis(1,3,2-dioxabor olane),
2,2'-(9,9-didodecyl-9H-fluorene-2,7-diyl)bis(1,3,2-dioxabor inane),
2,2'-(9,9-didodecyl-9H-fluorene-2,7-diyl)bis(4,4,5,5-tetram ethyl-1,3,2-dioxaborolane),
2,2'-(9,9-didodecyl-9H-fluorene-2,7-diyl)bis(5,5-dimethyl-1 ,3,2-dioxaborinane),
2,2'-(3,5-dimethoxy-9,9-dihexyl-9H-fluorene-2,7-diyl)bis(4, 4,5,5-tetramethyl-1,3,2-dioxaborolane),
2,2'-(9,9-octyl-9H-carbazole-3,6-diyl)bis(1,3,2-dioxaborola ne), 1,4-benzenediboronic acid,
2,2'-(1,4-phenylene)bis(5,5-dimethyl-1,3,2-dioxaborinane),
2,2'-(2,5-dimethyl-1,4-phenylene)bis(1,3,2-dioxaborolane),
2,2'-(2-methyl-5-octyl-1,4-phenylene)bis(4,4,5,5-tetramethy 1-1,3,2-dioxaborolane),
2,2'-(2,5-dibutyl-1,4-phenylene)bis(5,5-dimethyl-1,3,2-diox aborinane),
2,2'-[2,5-bis(hexyloxy)-1,4-phenylene]bis(5,5-dimethyl-1,3, 2-dioxaborinane), 2,5-thiophenediboronic acid,
2,5-bis(1,3,2-dioxaborolan-2-yl)thiophene,
2,5-bis(4,4,5,5-tetramethyl-1,3,2-dioxaborolan-2-yl)thiophe ne, 2,5-bis(1,3,2-dioxaborinan-2-yl)thiophene,
2,5-bis(5,5-dimethyl-1,3,2-dioxaborinan-2-yl)thiophene, 4,4'-biphenylboronic acid,
1,1'-bis(4,4,5,5-tetramethyl-1,3,2-dioxaborolan-2-yl)-4,4'-biphenyl, 1,1'-bis(1,3,2-dioxaborolan-2-yl)-4,4'-biphenyl,
1,1'-bis(1,3,2-dioxaborinan-2-yl)-4,4'-biphenyl,
1,1'-bis(5,5-dimethyl-1,3,2-dioxaborinan-2-yl)-4,4'-bipheny 1 and
5,5'-bis(4,4,5,5-tetramethyl-1,3,2-dioxaborolan-2-yl)-2,2'-bithiophene.

Examples of the aromatic monomer M² include
2,7-dibromo-9,9-dihexyl-9H-fluorene,
2,7-dibromo-9,9-dioctyl-9H-fluorene,
2,7-dibromo-9,9-didodecyl-9H-fluorene,
2,7-dichloro-9,9-dihexyl-9H-fluorene,
2,7-dichloro-9,9-dioctyl-9H-fluorene,
2,7-dichloro-9,9-didodecyl-9H-fluorene,
2-bromo-7-chloro-9,9-dihexyl-9H-fluorene,
2-bromo-7-chloro-9,9-dioctyl-9H-fluorene,
2-bromo-7-chloro-9,9-didodecyl-9H-fluorene,
1,4-dibromobenzene, 1,3-dibromobenzene,
1,4-dibromo-2-ethylbenzene, 1,4-dibromo-2-methoxybenzene,
dimethyl 2,5-dibromoterephthalate, 1,4-dibromonaphthalene,
9,10-dibromoanthracene, 1,5-dibromoanthracene,
3,5-dibromopyridine, 1,1'-dibromo-4,4'-biphenyl,
2,5-dibromopyridine, 1,4-dibromo-2,5-dihexyloxybenzene,
1-bromo-4-chlorobenzene, 1-bromo-4-chlorotoluene,
1-bromo-4-chloro-2-propylbenzene,
2,5-dibromo-4'-phenoxybenzophenone,
2,5-dibromo-3-hexylthiophene, 2,5-dibromo-3-octylthiophene,
2,5-dibromo-3-dodecylthiophene,
2,5-dichloro-3-hexylthiophene,
5,5'-dibromo-2,2'-bithiophene,
5,5'-dibromo-3,3'-dihexyl-2,2'-bithiophene,
N,N-bis(4-bromophenyl)-4-(4-tert-butyl)aniline,
N,N-bis(4-bromophenyl)-4-(1-methylpropyl)aniline,
N,N-bis(4-bromophenyl)aniline,
N,N'-bis(4-bromophenyl)-N,N'-bis(4-n-butylphenyl)-1,4-diami nobenzene,
N,N'-bis(4-bromophenyl)-bicyclo[4,2,0]octa-1,3,5-trien-3-am ine,
N,N'-bis(4-bromophenyl)-N,N'-bis(4-butylphenyl)-1,4-diamino benzene,
N,N'-bis(4-bromophenyl)-N,N'-bis[4-(1,1-dimethylethyl)-2,6-dimethylphenyl]-1,4-diaminobenzene,
4,7-dibromo-2,1,3-benzothiadiazole,
4,7-dibromo-2,1,3-benzoselenadiazole,
4,7-bis(5-bromo-2-thienyl)-2,1,3-benzothiadiazole,
4,7-bis(5-bromo-4-methyl-2-thienyl)-2,1,3-benzothiadiazole,
4,7-bis(5-bromo-3-methyl-2-thienyl)-2,1,3-benzothiadiazole,
3,7-dibromo-10-(4-n-butylphenyl)-10H-phenothiazine,
3,7-dibromo-10-(4-n-butylphenyl)-10H-phenoxazine,
N,N'-bis(4-bromophenyl)-N,N'-bis(ethoxycarbonylphenyl)-4,4' -diaminobiphenyl and
N,N'-diphenyl-N,N'-bis(4-bromophenyl)-4,4'-diaminobiphenyl.

Examples of the aromatic monomer M³ include
2-(2-bromo-9,9-dihexyl-9H-fluoren-7-yl)-1,3,2-dioxaborolane,
2-(2-bromo-9,9-dihexyl-9H-fluoren-7-yl)-5,5-dimethyl-1,3,2-dioxaborinane,
2-(2-bromo-9,9-dioctyl-9H-fluoren-7-yl)-1,3,2-dioxaborinane,
2-(2-bromo-9,9-didodecyl-9H-fluoren-7-yl-4,4,5,5-tetramethy 1-1,3,2-dioxaborolane,
2-(2-chloro-9,9-dihexyl-9H-fluoren-7-yl)-4,4,5,5-tetramethy 1-1,3,2-dioxaborolane,
2-(4-bromophenyl)-1,3,2-dioxaborolene,
2-(4-bromo-2-ethyl-3-methylphenyl)-1,3,2-dioxaborinane,
2-(4-bromo-2-ethoxy-5-isopropylphenyl)-5,5-dimethyl-1,3,2-d ioxaborinane, 2-(4-chlorophenyl)-1,3,2-dioxaborolane,
2-(4-chlorophenyl)-1,3,2-dioxaborinane,
2-(4-chloro-2,3-diisopropylphenyl)-1,3,2-dioxaborolane,
2-(3-butyl-4-chloro-5-ethoxyphenyl)-1,3,2-dioxaborinane,
2-[4'-bromo-(1,1'-biphenyl)]-4-yl-1,3,2-dioxaborolane,
2-[4'-bromo-(1,1'-biphenyl)]-4-yl-1,3,2-dioxaborinane,
2-[4'-chloro-(1,1'-biphenyl)]-4-yl-4,4,5,5-tetramethyl-1,3, 2-dioxaborolane,
2-[4'-chloro-(1,1-biphenyl)]-4-yl-5,5-dimethyl-1,3,2-dioxab orinane, 2-bromo-5-(1,3,2-dioxaborolan-2-yl)thiophene and
5-bromo-5'-(4,4,5,5-tetramethyl-1,3,2-dioxaborolan-2-yl)-2, 2'-bithiophene.

When the conjugated polymer is produced by contacting (A) the aromatic monomer M¹ with the aromatic monomer M², the amounts to be used of the aromatic monomer M¹ and the aromatic monomer M² are decided so that a ratio of total number of moles of the reactive functional groups of the aromatic monomer M² per total number of moles of the boron-containing functional groups of the aromatic monomer M¹ will usually become 0.8 to 1.2, preferably 0.9 to 1.1 and more preferably 0.95 to 1.05.

The palladium catalyst used in the present invention is a palladium catalyst wherein a phosphine compound is coordinated to palladium. As the palladium catalyst, a commercially available one may be used and one prepared by previously contacting a palladium compound with a phosphine compound, and it may prepare by adding a palladium compound and a phosphine compound to a reaction system containing aromatic monomers.

Examples of the palladium catalyst include tetrakis(triphenylphosphine)palladium (0), bis(acetate)bis(triphenylphosphine)palladium (II), bis[1,2-bis(diphenylphosphino)ethane]palladium (0), bis[1,2-bis(diphenylphosphino)ethane]dichloropalladium (II), dibromobis(triphenylphosphine)palladium (II), dichlorobis(dimethylphenylphosphine)palladium (II), dichlorobis(methyldiphenylphosphine)palladium (II), dichlorobis(tricyclohexylphosphine)palladium (II), dichlorobis(triethylphosphine)palladium (II), dichlorobis(triphenylphosphine)palladium (II), dichlorobis[tris(2-methylphenyl)phosphine]palladium (II), tetrakis(methyldiphenylphosphine)palladium (0) and tetrakis(tricyclohexylphosphine)palladium (0).

Examples of the palladium compound include a zerovalent or divalent palladium compound such as tris(dibenzylideneacetone)dipalladium (0), tris(dibenzylideneacetone)dipalladium (0) chloroform adduct, palladium acetate (II), palladium dichloride (II), (bicycle[2.2.1]hepta-2,5-diene)dichloropalladium (II), (2,2'-bipyridyl)dichloropalladium (II), bis(acetonitrile)chloronitropalladium (II), bis(benzonitrile)dichloropalladium (II), bis(acetonitrile)dichloropalladium (II), dichloro(1,5-cyclooctadiene)palladium (II), dichloro(ethylenediamine)palladium (II), dichloro(N,N,N',N'-tetramethylenediamine)palladium (II), dichloro(1,10-phenanthroline)palladium (II), palladium (II) acetylacetonate, palladium (II) dibromide, palladium (II) hexafluoroacetylacetonate, palladium (II) diiodide, palladium (II) nitrate, palladium (II) sulfate, palladium (II) trifluoroacetate, palladium (IV) potassium chloride, palladium (II) potassium bromide, palladium (II) potassium chloride, palladium (II) sodium chloride, tetraamminepalladium (II) nitrate and tetrakis(acetonitrile)palladium (II) tetrafluoroborate. Among them, palladium (II) acetate, palladium (II) dichloride, tris(dibenzylidenacetone)dipalladium (0) and tris(dibenzylidenacetone)dipalladium (0) chloroform adduct are preferable.

A commercially available palladium compound is usually used.

Examples of the phosphine compound include a phosphine compound wherein at least one alkyl group is bonded to a phosphorus atom (hereinafter, simply referred to as the alkylphosphine) and a phosphine compound wherein three substituted or unsubstituted aryl groups are bonded to a phosphorus atom (hereinafter, simply referred to as the arylphosphine).

Examples of the alkylphosphine include a monodentate alkylphosphine having one phosphorus atom to which at least one alkyl group is bonded and a didentate alkylphosphine having two phosphorus atoms to which at least one alkyl group is bonded, and the monodentate alkylphosphine is preferable.

Examples of the alkylphosphine include a monodentate alkylphosphine such as tricyclohexylphosphine, tributylphosphine, tri-tert-butylphosphine, triisopropylphosphine, triethylphosphine, trimethylphosphine, butyldiadamantylphosphine, adamantyldibutylphosphine, cyclohexyldiisopropylphosphine, isopropyldicylohexylphosphine, tert-butyldicylohexylphosphine, cyclohexylditert-butylphosphine, tert-butyldimethylphosphine, di-tert-butylmethylphosphine, methyldiphenylphosphine, dimethylphenylphosphine, ethyldiphenylphosphine, diethylphenylphosphine, diphenylpropylphosphine, dipropylphenylphosphine, butyldiphenylphosphine, dibutylphenylphosphine, cyclohexyldiphenylphosphine, dicylohexylphenylphosphine, tert-butyldiphenylphosphine and di-tert-butylphenylphosphine, and a bidentate alkylphosphine such as diphenylphosphinomethane, 1,2-diphenylphosphinoethane, 1,3-diphenylphosphinopropane, 1,4-diphenylphosphinobutane, 1,2-dicyclohexylphosphinoethane, 1,3-dicyclohexylphosphinopropane, 1,4-dicyclohexylphosphinobutane, 1,2-dimethylphosphinoethane, 1,3-dimethylphosphinopropane, 1,4-dimethylphosphinobutane, 1,2-diethylphosphinoethane, 1,3-diethylphosphinopropane, 1,4-diethylphosphinobutane, 1,2-diisopropylphosphinoethane, 1,3-diisopropylphosphinopropane, 1,4-diisopropylphosphinobutane, 2,3-bis(diphenylphosphino)butane, 2,4-bis(diphenylphosphino)pentane, 1,2-bis(dipentafluorophenylphosphino)ethane, 1,3-bis(dipentafluorophenylphosphino)propane, 1,4-bis(dipentafluorophenylphosphino)butane and 2-(dicylohexylphosphino)biphenyl.

Among the monodentate alkylphosphines, a trialkylphosphine represented by the formula (I): 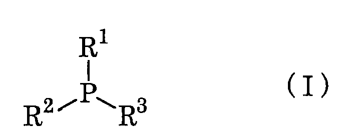 wherein R¹, R² and R³ each independently represents a C1-C30 alkyl group, is preferable.

Examples of the C1-C30 alkyl group include a methyl group, an ethyl group, a propyl group, an isopropyl group, a butyl group, an isobutyl group, a tert-butyl group, a pentyl group, a hexyl group, an octyl group, a decyl group, a dodecyl group, a cyclopentyl group, a cyclohexyl group and an adamantyl group.

Examples of the trialkylphosphine include tricyclohexylphosphine, tributylphosphine, tri-tert-butylphosphine, triisopropylphosphine, triethylphosphine, trimethylphosphine, butyldiadamantylphosphine, adamantyldibutylphosphine, cyclohexyldiisopropylphosphine, isopropyldicyclohexylphosphine, tert-butyldicylohexylphosphine, cyclohexyldi-tert-butylphosphine, tert-butyldimethylphosphine and di-tert-butylmethylphosphine, and tricyclohexylphosphine is preferable.

As the arylphosphine, a triarylphosphine represented by the formula (II): 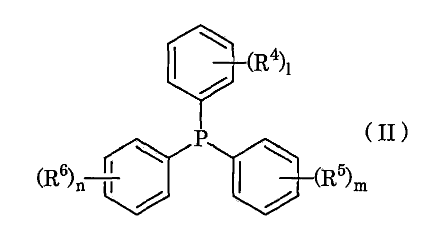 wherein R⁴, R⁵ and R⁶ each independently represents a halogen atom, a C1-C20 alkyl group, a C1-C20 alkoxy group or a C6-C20 aryl group, 1, m and n each independently an integer of 0 to 5, and when 1 represents an integer of 2 or more, R⁴s may be different from each other, when m represents an integer of 2 or more, R^{s}s may be different from each other, and when n represents an integer of 2 or more, R⁶s may be different from each other, is preferable, and a triarylphosphine wherein R⁴, R⁵ and R⁶ each independently represents a fluorine atom, a C1-C6 alkyl group or a C1-C6 alkoxy group is more preferable.

Examples of the halogen atom include a fluorine atom, a chlorine atom and a bromine atom, and a fluorine atom and a chlorine atom are preferable.

Examples of the C1-C20 alkyl group and C1-C20 alkoxy group include the same as described above.

Examples of the triarylphosphine include triphenylphosphine, tris(2-methylphenyl)phosphine, tris(3-methylphenyl)phosphine, tris(4-methylphenyl)phosphine, tris(pentafluorophenyl)phosphine, tris(4-fluorophenyl)phosphine, tris(2-methoxyphenyl)phosphine, tris(3-methoxyphenyl)phosphine, tris(4-methoxyphenyl)phosphine, tris(2,4,6-trimethoxyphenyl)phosphine, tris(3-chlorophenyl)phosphine and tris(4-chlorophenyl)phosphine, and triphenylphosphine and tris(4-methylphenyl)phosphine are preferable.

As the phosphine compound, a commercially available phosphine compound may be used or one produced according to a known method may be used.

When a conjugated polymer is produced by (A) contacting the aromatic monomer M¹ with the aromatic monomer M², the amount of the palladium catalyst to be used is usually 0.001 to 10 mol%, and preferably 0.01 to 5mol% per sum of the aromatic monomer M¹ and the aromatic monomer M².

When a conjugated polymer is produced by (B) contacting the aromatic monomer M³s with each other, the amount of the palladium catalyst to be used is usually 0.001 to 10 mol%, and preferably 0.01 to 5mol% per the aromatic monomer M³.

When the palladium catalyst is prepared in the reaction system by adding the palladium compound and the phosphine compound to the reaction system containing the aromatic monomers, the amount of the palladium compound to be used is usually 0.001 to 10 mol%, and preferably 0.01 to 5mol% per sum of the aromatic monomer M¹ and the aromatic monomer M² or the aromatic monomer M³. The amount of the phosphine compound to be used is usually 0.2 to 20 moles and preferably 0.8 to 5 moles per 1 mole of the palladium compound.

Examples of the ether solvent include an aliphatic ether solvent such as ethylene glycol dimethyl ether, tetrahydrofuran and 1,4-dioxane, and tetrahydrofuran is preferable. An ether solvent previously hydrated is usually used.

When the amount of the ether solvent to be used is too much, a conjugated polymer having a small molecular weight tends to be obtained, and when the amount thereof is to small, the property of the reaction mixture tends to be bad, and therefore, the amount thereof is usually 1 to 200 parts by weight and preferably 5 to 100 parts by weight per 1 parts by weight of all of the aromatic monomers used.

A commercially available cesium carbonate is usually used. The amount thereof to be used is usually 1 mole or more and preferably 2 to 5 moles per 1 mole of the reactive functional group of the aromatic monomer M² or the aromatic monomer M³.

In the present invention, a polymerization reaction of the aromatic monomers is carried out in the presence of 1 to 100 moles of water per 1 mole of the boron-containing functional group of the aromatic monomer. When a palladium catalyst wherein the alkylphosphine is coordinated to a palladium is used as the palladium catalyst, a polymerization reaction is preferably carried out in the presence of 1 to 75 moles of water and more preferably 1 to 45 moles of water per 1 mole of the boron-containing functional group of the aromatic monomer. When a palladium catalyst wherein the arylphosphine is coordinated to a palladium is used as the palladium catalyst, a polymerization reaction is preferably carried out in the presence of 1 to 25 moles of water per 1 mole of the boron-containing functional group of the aromatic monomer.

When a polymerization reaction is conducted by contacting (A) the aromatic monomer M¹ with the aromatic monomer M², the polymerization reaction is usually conducted by mixing the aromatic monomer M¹, the aromatic monomer M², the ether solvent, the palladium catalyst, cesium carbonate and water. The polymerization reaction may be conducted by mixing all amounts of the aromatic monomer M¹ and all amounts of the aromatic monomer M². The polymerization reaction may be conducted by mixing a part of the aromatic monomer M¹ used and a part of the aromatic monomer M² used, and then may be further conducted by mixing the obtained reaction mixture with the residual the aromatic monomer M¹ and the aromatic monomer M².

When a polymerization reaction is conducted by contacting (B) the aromatic monomer M³s with each other, the polymerization reaction is usually conducted by mixing the aromatic monomer M³, the ether solvent, the palladium catalyst, cesium carbonate and water.

The polymerization temperature is usually 0 to 200°C, and preferably 10 to 120°C.

While the polymerization time differs depending on the amounts of the palladium catalyst used, it is usually 1 to 96 hours.

After completion of the polymerization reaction, for example, a conjugated polymer can be precipitated by mixing the reaction mixture obtained with a solvent in which the conjugated polymer produced is insoluble or poorly soluble. The precipitated conjugated polymer can be separated from the reaction mixture by filtration or the like. The structures and the molecular weight of the conjugated polymer separated can be analyzed by a conventional means such as gel permeation chromatography and NMR.

Examples of the solvent in which the conjugated polymer produced is insoluble or poorly soluble include water, methanol, ethanol and acetonitrile, and water and methanol are preferable.

Specific examples of the structural unit of the conjugated polymer thus obtained are shown below. In the following formulae, R¹⁰, Y, Z, p, q, r and s represent the same meanings as defined above, and when multiple Zs and Ys exist, they may be different from each other.

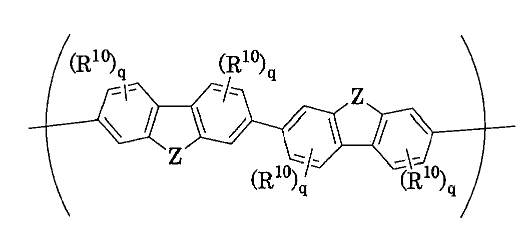

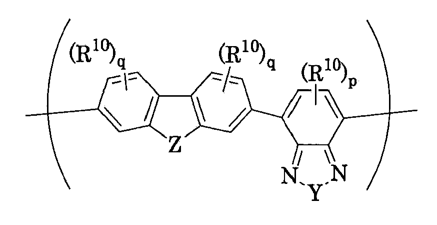

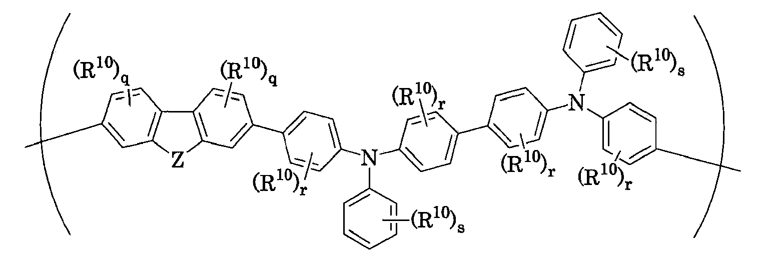

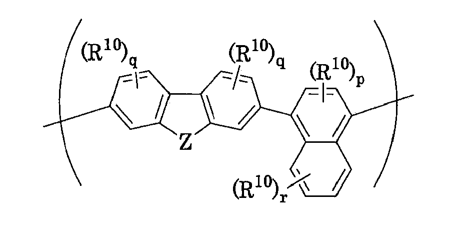

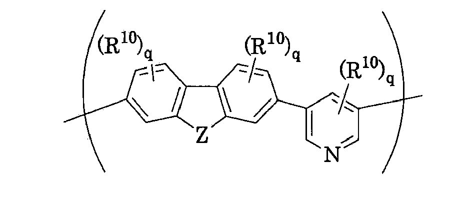

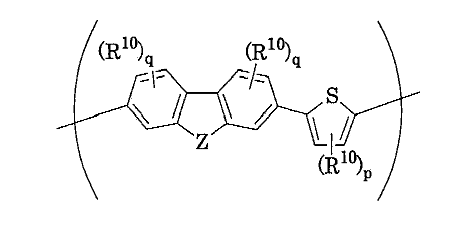

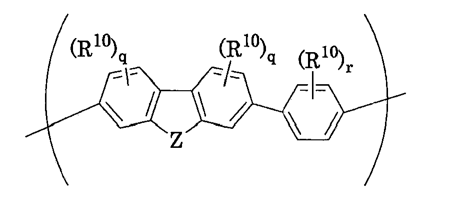

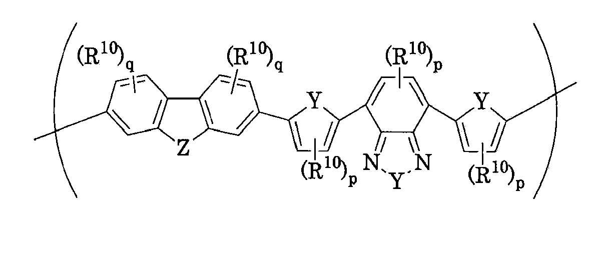

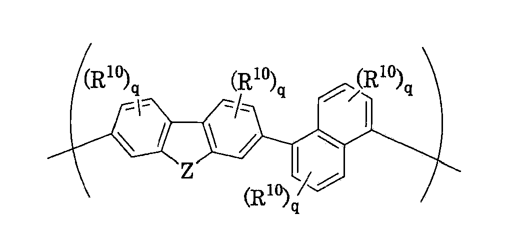

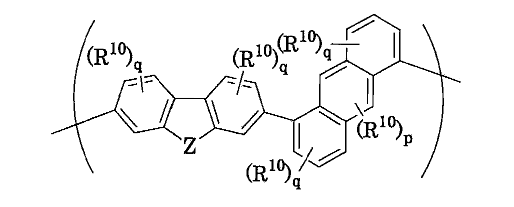

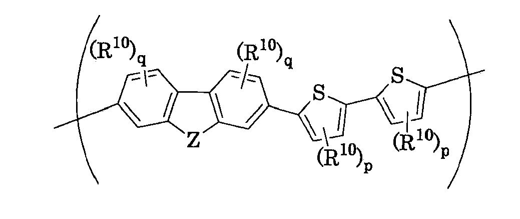

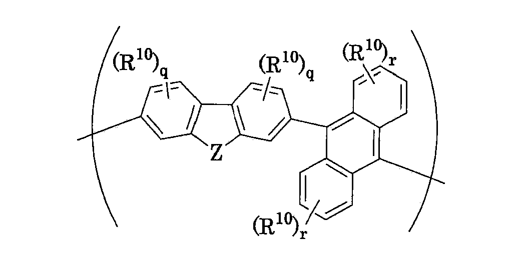

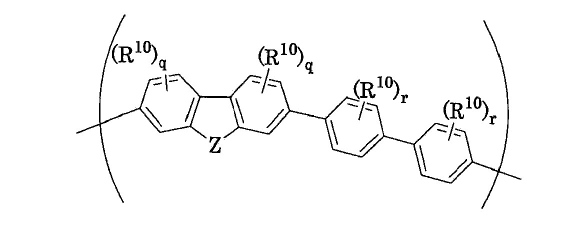

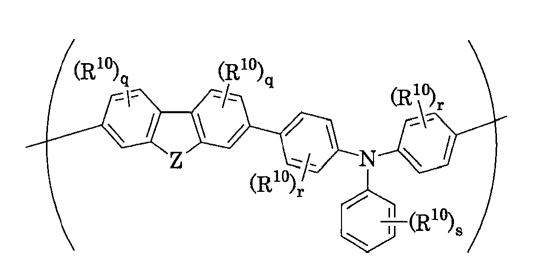

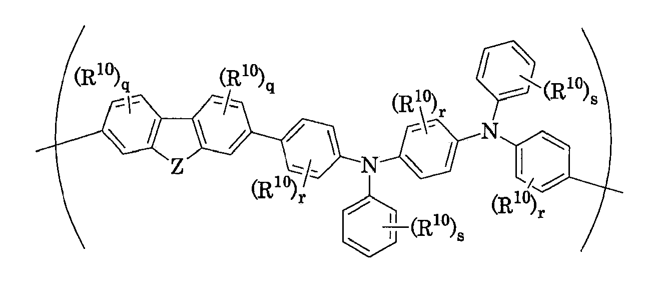

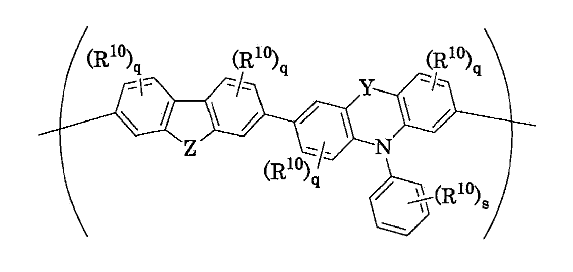

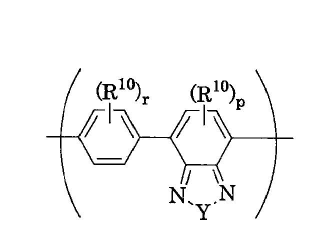

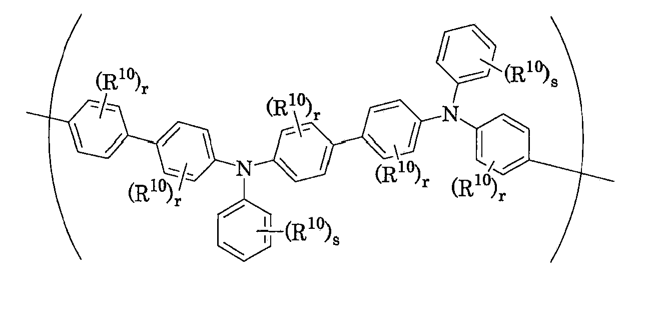

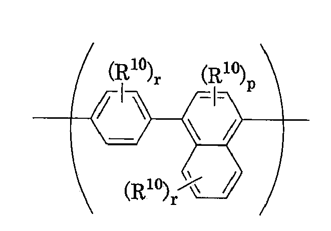

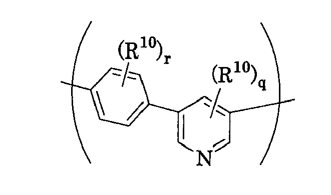

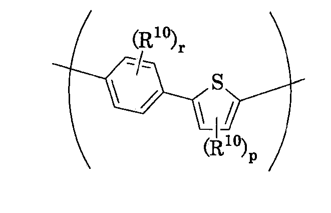

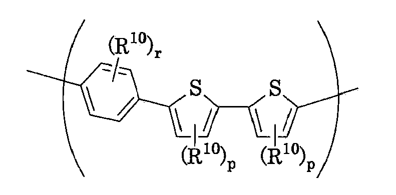

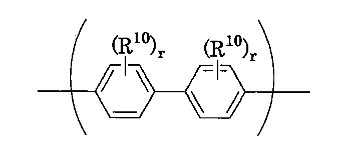

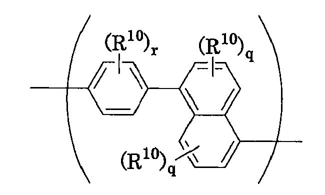

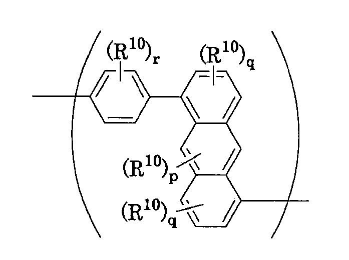

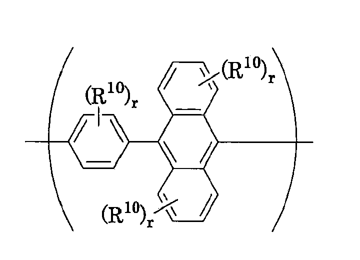

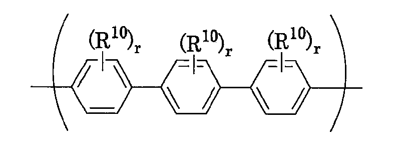

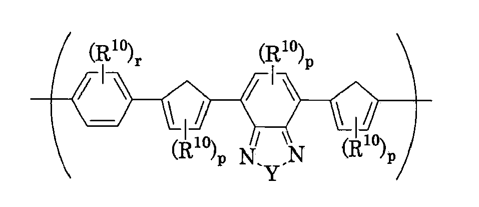

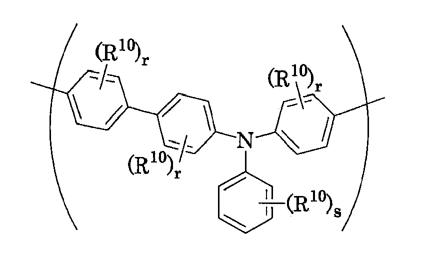

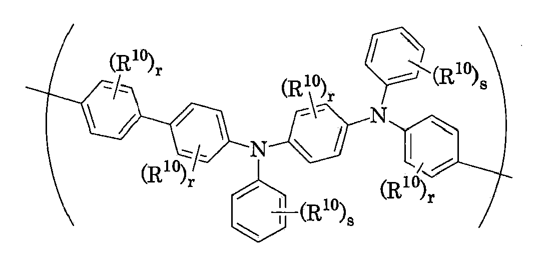

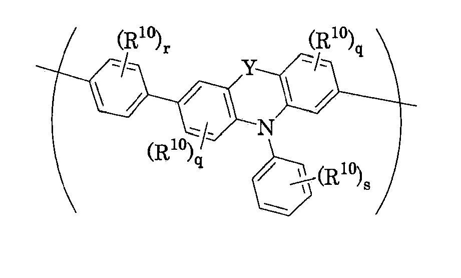

### Examples

The present invention will be further illustrated by Examples in more detail below, but the present invention is not limited to these Examples. The conjugated polymers obtained were analyzed with gel permeation chromatography by the following analytical conditions, and the weight-average molecular weight (Mw) and number-average molecular weight (Mn) in terms of polystyrene were calculated from the analytical results obtained.

### <Analytical conditions>

GPC measuring apparatus: CTO-10A (manufactured by Shimadzu Corporation)
Column: PLgel 5 µm MIXED-C (300x7.5 mm) and PLgel 5 µm MIXED-D (300x7.5 mm) was connected in series (both of them were manufactured by POLYMER LABORATORIES)
Column temperature: 60°C, Eluent: tetrahydrofuran, Flow rate: 0.6 mL/min
Detection wavelength: 254 nm

### Example 1

To the glass reaction vessel equipped with a condenser, 106 mg of 2,2-(9,9-dioctyl-9H-fluorene-2,7-diyl)bis(1,3,2-dioxaborola ne), 132 mg of 2,7-dibromo-9,9-didodecyl-9H-fluorene, 4.6 mg of tris(dibenzylideneacetone)dipalladium (0), 5.6 mg of tricyclohexylphosphine, 391 mg of cesium carbonate, 2.99 mL of tetrahydrofuran (dehydrated) and 0.01 mL of water were added. In the atmosphere of nitrogen, the obtained mixture was refluxed for 6 hours to obtain a reaction mixture containing the conjugated polymer comprising the following structural unit.
Mw: 326,000 g/mol, Mn: 131,000 g/mol

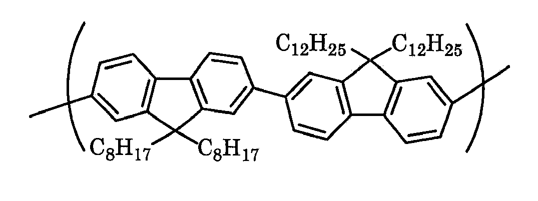

### Example 2

The reaction mixture containing the conjugated polymer comprising the structural unit shown in Example 1 was obtained according to the same manner as that of Example 1, except that the amount of tetrahydrofuran (dehydrated) was 2.97 mL and the amount of water was 0.03 mL.
Mw: 393,000 g/mol, Mn: 184,000 g/mol

### Example 3

The reaction mixture containing the conjugated polymer comprising the structural unit shown in Example 1 was obtained according to the same manner as that of Example 1, except that the amount of tetrahydrofuran (dehydrated) was 2.85 mL and the amount of water was 0.15 mL.
Mw: 404,000 g/mol, Mn: 196,000 g/mol

### Example 4

The reaction mixture containing the conjugated polymer comprising the structural unit shown in Example 1 was obtained according to the same manner as that of Example 1, except that the amount of tetrahydrofuran (dehydrated) was 2.70 mL and the amount of water was 0.30 mL.
Mw: 322,000 g/mol, Mn: 140,000 g/mol

### Example 5

The reaction mixture containing the conjugated polymer comprising the structural unit shown in Example 1 was obtained according to the same manner as that of Example 1, except that the amount of tetrahydrofuran (dehydrated) was 2.60 mL and the amount of water was 0.40 mL.
Mw: 221,000 g/mol, Mn: 92,000 g/mol

### Example 6

The reaction mixture containing the conjugated polymer comprising the structural unit shown in Example 1 was obtained according to the same manner as that of Example 1, except that the amount of tetrahydrofuran (dehydrated) was 2.50 mL and the amount of water was 0.50 mL.
Mw: 162,000 g/mol, Mn: 65,000 g/mol

### Example 7

The reaction mixture containing the conjugated polymer comprising the structural unit shown in Example 1 was obtained according to the same manner as that of Example 1, except that the amount of tetrahydrofuran (dehydrated) was 2.40 mL and the amount of water was 0.60 mL.
Mw: 138,000 g/mol, Mn: 70,000 g/mol

### Comparative Example 1

The reaction mixture containing the conjugated polymer comprising the structural unit shown in Example 1 was obtained according to the same manner as that of Example 1, except that the amount of tetrahydrofuran (dehydrated) was 3.0 mL and 0.01 mL of water was not added.
Mw: 4,000 g/mol, Mn: 3,000 g/mol

### Comparative Example 2

To the glass reaction vessel equipped with a condenser, 212 mg of 2,2-(9,9-dioctyl-9H-fluorene-2,7-diyl)bis(1,3,2-dioxaborola ne), 264 mg of 2,7-dibromo-9,9-didodecyl-9H-fluorene, 9.2 mg of tris(dibenzylideneacetone)dipalladium (0), 11.2 mg of tricyclohexylphosphine, 782 mg of cesium carbonate, 5.99 mL of tetrahydrofuran (dehydrated) and 0.01 mL of water were added. In the atmosphere of nitrogen, the obtained mixture was refluxed for 6 hours to obtain a reaction mixture containing the conjugated polymer comprising the structural unit shown in Example 1.
Mw: 54,000 g/mol, Mn: 28,000 g/mol

### Example 8

To the glass reaction vessel equipped with a condenser, 106 mg of 2,2-(9,9-dioctyl-9H-fluorene-2,7-diyl)bis(1,3,2-dioxaborola ne), 132 mg of 2,7-dibromo-9,9-didodecyl-9H-fluorene, 4.6 mg of tris(dibenzylideneacetone)dipalladium (0), 5.2 mg of triphenylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the structural unit shown in Example 1.
Mw: 143,000 g/mol, Mn: 63,000 g/mol

### Example 9

The reaction mixture containing the conjugated polymer comprising the structural unit shown in Example 1 was obtained according to the same manner as that of Example 8, except that the amount of tetrahydrofuran (dehydrated) was 2.94 mL and the amount of water was 0.06 mL.
Mw: 170,000 g/mol, Mn: 73,000 g/mol

### Example 10

The reaction mixture containing the conjugated polymer comprising the structural unit shown in Example 1 was obtained according to the same manner as that of Example 8, except that the amount of tetrahydrofuran (dehydrated) was 2.85 mL and the amount of water was 0.15 mL.
Mw: 125,000 g/mol, Mn: 54,000 g/mol

### Comparative Example 3

The reaction mixture containing the conjugated polymer comprising the structural unit shown in Example 1 was obtained according to the same manner as that of Example 8, except that the amount of tetrahydrofuran (dehydrated) was 3.0 mL and the amount of water was 0.03 mL.
Mw: 20,000 g/mol, Mn: 10,000 g/mol

### Example 11

The reaction mixture containing the conjugated polymer comprising the structural unit shown in Example 1 was obtained according to the same manner as that of Example 8, except that the amount of tetrahydrofuran (dehydrated) was 2.70 mL and the amount of water was 0.30 mL.
Mw: 69,000 g/mol, Mn: 30,000 g/mol

### Example 12

The reaction mixture containing the conjugated polymer comprising the structural unit shown in Example 1 was obtained according to the same manner as that of Example 8, except that the amount of tetrahydrofuran (dehydrated) was 2.40 mL and the amount of water was 0.60 mL.
Mw: 76,000 g/mol, Mn: 33,000 g/mol

### Example 13

To the glass reaction vessel equipped with a condenser, 2.12 g of 2,2-(9,9-dioctyl-9H-fluorene-2,7-diyl)bis(1,3,2-dioxaborola ne), 2.64 g of 2,7-dibromo-9,9-didodecyl-9H-fluorene, 11.0 mg of tris(dibenzylideneacetone)dipalladium (0), 12.6 g of triphenylphosphine, 7.82 g of cesium carbonate, 39.6 mL of tetrahydrofuran (dehydrated) and 0.4 mL of water were added. In the atmosphere of nitrogen, the obtained mixture was refluxed for 48 hours. The obtained reaction mixture was cooled to room temperature, and then was diluted by adding 60 mL of toluene. The diluted reaction mixture was passed through Celite-545 manufactured by Nacarai Tesque, Inc. (amount to be used: 20 g) to remove the solid matters. The obtained filtrate was concentrated to obtain 2.65 g of the conjugated polymer comprising the structural unit shown in Example 1.
Mw: 160,000 g/mol, Mn: 67,000 g/mol

### Example 14

The reaction mixture containing the conjugated polymer comprising the structural unit shown in Example 1 was obtained according to the same manner as that of Example 8, except that 6.1 mg of tris(4-methylphenyl)phosphine was used in place of 5.2 mg of triphenylphosphine.
Mw: 178,000 g/mol, Mn: 75,000 g/mol

### Example 15

To the glass reaction vessel equipped with a condenser, 106 mg of 2,2-(9,9-dioctyl-9H-fluorene-2,7-diyl)bis(1,3,2-dioxaborola ne), 59 mg of 4,7-dibromo-2,1,3-benzothiadiazole, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural unit.
Mw: 214,000 g/mol, Mn: 98,000 g/mol

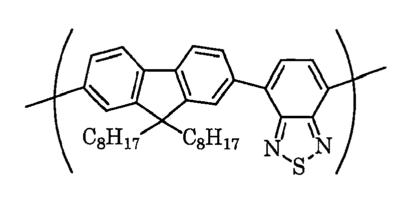

### Example 16

To the glass reaction vessel equipped with a condenser, 106 mg of 2,2-(9,9-dioctyl-9H-fluorene-2,7-diyl)bis(1,3,2-dioxaborola ne), 59 mg of 4,7-dibromo-2,1,3-benzothiadiazole, 4.6 mg of tris(dibenzylideneacetone)dipalladium (0), 5.2 mg of triphenylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the structural unit shown in Example 15.
Mw: 108,000 g/mol, Mn: 45,000 g/mol

### Comparative Example 4

To the glass reaction vessel equipped with a condenser, 29 mg of tetrakis(triphenylphosphine )palladium (0), 3 mL of an aqueous 2M potassium carbonate solution, 265 mg of 2,2-(9,9-dioctyl-9H-fluorene-2,7-diyl)bis(1,3,2-dioxaborola ne), 147 mg of 4,7-dibromo-2,1,3-benzothiadiazole and 2.00 mL of tetrahydrofuran (dehydrated) were added. In the atmosphere of nitrogen, the obtained mixture was refluxed for 6 hours to obtain a reaction mixture containing the conjugated polymer comprising the structural unit shown in Example 15.
Mw: 5,000 g/mol, Mn: 3,000 g/mol

### Comparative Example 5

To the glass reaction vessel equipped with a condenser, 23 mg of tetrakis(triphenylphosphine )palladium (0), 3. 0 mL of an aqueous 2M sodium carbonate solution, 8 mg of Aliquat 336 manufactured by Aldrich, 212 mg of 2,2-(9,9-dioctyl-9H-fluorene-2,7-diyl)bis(1,3,2-dioxaborola ne), 118 mg of 4,7-dibromo-2,1,3-benzothiadiazole and 3.00 mL of toluene were added. In the atmosphere of nitrogen, the obtained mixture was refluxed for 6 hours to obtain a reaction mixture containing the conjugated polymer comprising the structural unit shown in Example 15.
Mw: 53,000 g/mol, Mn: 23,000 g/mol

### Example 17

To the glass reaction vessel equipped with a condenser, 106 mg of 2,2-(9,9-dioctyl-9H-fluorene-2,7-diyl)bis(1,3,2-dioxaborola ne), 158 mg of N,N'-di(4-bromophenyl)-N,N'-di(3-ethoxycarbonylphenyl)-4,4' -diaminobiphenyl, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural unit.
Mw: 183,000 g/mol, Mn: 57,000 g/mol

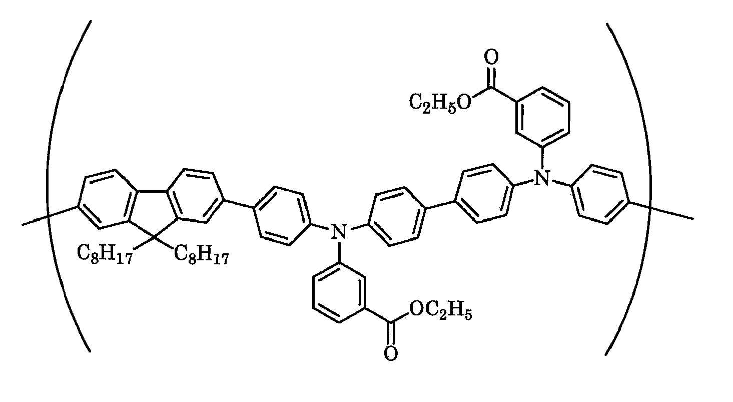

### Comparative Example 6

The reaction mixture containing the conjugated polymer comprising the structural unit shown in Example 17 was obtained according to the same manner as that of Comparative Example 4, except that 395.3 mg of N,N'-bis(4-bromophenyl)-N,N'-bis(3-ethoxycarbonylphenyl)-4, 4'-diaminobiphenyl was used in place of 147 mg of 4,7-dibrmo-2,1,3-benzothiadiazole.
Mw: 40,000 g/mol, Mn: 20,000 g/mol

### Comparative Example 7

The reaction mixture containing the conjugated polymer comprising the structural unit shown in Example 17 was obtained according to the same manner as that of Comparative Example 5, except that 316.2 mg of N,N'-bis(4-bromophenyl)-N,N'-bis(3-ethoxycarbonylphenyl)-4, 4'-diaminobiphenyl was used in place of 118 mg of 4,7-dibrmo-2,1,3-benzothiadiazole.
Mw: 20,000 g/mol, Mn: 10,000 g/mol

### Example 18

To the glass reaction vessel equipped with a condenser, 106 mg of 2,2-(9,9-dioctyl-9H-fluorene-2,7-diyl)bis(1,3,2-dioxaborola ne), 57 mg of 1,4-dibromonaphthalene, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural unit.
Mw: 139,000 g/mol, Mn: 55,000 g/mol

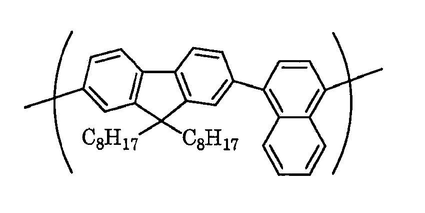

### Comparative Example 8

The reaction mixture containing the conjugated polymer comprising the structural unit shown in Example 18 was obtained according to the same manner as that of Comparative Example 4, except that 143 mg of 1,4-dibromonaphthalene was used in place of 147 mg of 4,7-dibrmo-2,1,3-benzothiadiazole.
Mw: 12,000 g/mol, Mn: 6,000 g/mol

### Comparative Example 9

The reaction mixture containing the conjugated polymer comprising the structural unit shown in Example 18 was obtained according to the same manner as that of Comparative Example 5, except that 114 mg of 1,4-dibromonaphthalene was used in place of 118 mg of 4,7-dibrmo-2,1,3-benzothiadiazole.
Mw: 84,000 g/mol, Mn: 36,000 g/mol

### Example 19

To the glass reaction vessel equipped with a condenser, 106 mg of 2,2-(9,9-dioctyl-9H-fluorene-2,7-diyl)bis(1,3,2-dioxaborola ne), 93 mg of 2,7-dibromo-9,9-didodecyl-9H-fluorene, 14 mg of 3,5-dibromopyridine, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural units.
Mw: 169,000 g/mol, Mn: 80,000 g/mol

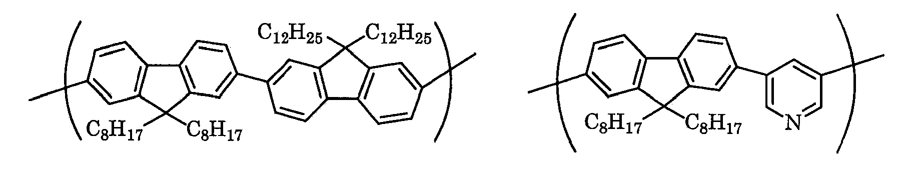

### Comparative Example 10

The reaction mixture containing the conjugated polymer comprising the structural units shown in Example 19 was obtained according to the same manner as that of Comparative Example 4, except that 36 mg of 3,5-dibromopyridine and 231 mg of 2,7-dibromo-9,9-didodecyl-9H-fluorene were used in place of 147 mg of 4,7-dibrmo-2,1,3-benzothiadiazole.
Mw: 72,000 g/mol, Mn: 31,000 g/mol

### Example 20

To the glass reaction vessel equipped with a condenser, 106 mg of 2,2-(9,9-dioctyl-9H-fluorene-2,7-diyl)bis(1,3,2-dioxaborola ne), 106 mg of 2,7-dibromo-9,9-didodecyl-9H-fluorene, 13 mg of 2,5-dibromo-3-hexylthiophene, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural units.
Mw: 177,000 g/mol, Mn: 71,000 g/mol

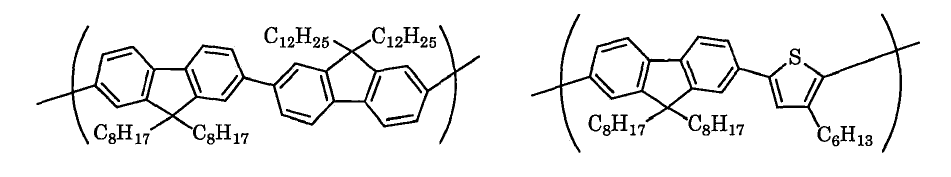

### Comparative Example 11

The reaction mixture containing the conjugated polymer comprising the structural units shown in Example 20 was obtained according to the same manner as that of Comparative Example 4, except that 46.9 mg of 2,5-dibromo-3-hexylthiophene and 231 mg of 2,7-dibromo-9,9-didodecyl-9H-fluorene were used in place of 147 mg of 4,7-dibrmo-2,1,3-benzothiadiazole.
Mw: 47,000 g/mol, Mn: 21,000 g/mol

### Example 21

To the glass reaction vessel equipped with a condenser, 106 mg of 2,2-(9,9-dioctyl-9H-fluorene-2,7-diyl)bis(1,3,2-dioxaborola ne), 93 mg of 2,7-dibromo-9,9-didodecyl-9H-fluorene, 27 mg of 4,7-bis(5-bromo-2-thienyl)-2,1,3-benzothiazole, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural units.
Mw: 156,000 g/mol, Mn: 72,000 g/mol

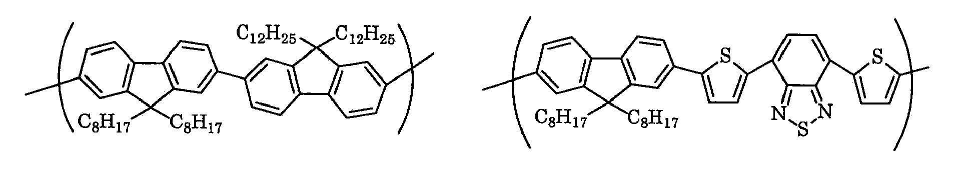

### Comparative Example 12

The reaction mixture containing the conjugated polymer comprising the structural units shown in Example 21 was obtained according to the same manner as that of Comparative Example 4, except that 69 mg of 4,7-bis(5-bromo-2-thienyl)-2,1,3-benzothiazole and 231 mg of 2,7-dibromo-9,9-didodecyl-9H-fluorene were used in place of 147 mg of 4,7-dibrmo-2,1,3-benzothiadiazole.
Mw: 71,000 g/mol, Mn: 30,000 g/mol

### Example 22

To the glass reaction vessel equipped with a condenser, 60 mg of 2,2'-(1,4-phenylene)bis(5,5-dimethyl-1,3,2-dioxaborinane), 132 mg of 2,7-dibromo-9,9-didodecyl-9H-fluorene, 4.6 mg of tris(dibenzylideneacetone)dipalladium (0), 5.6 mg of tricyclohexylphosphine, 391 mg of cesium carbonate, 2.97 mL of tetrahydrofuran (dehydrated) and 0.03 mL of water were added. In the atmosphere of nitrogen, the obtained mixture was refluxed for 6 hours to obtain a reaction mixture containing the conjugated polymer comprising the following structural units.
Mw: 272,000 g/mol, Mn: 132,000 g/mol

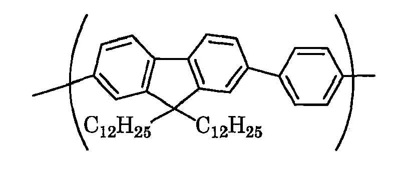

### Comparative Example 13

The reaction mixture containing the conjugated polymer comprising the structural units shown in Example 22 was obtained according to the same manner as that of Comparative Example 4, except that 330 mg of 2,7-dibromo-9,9-didodecyl-9H-fluorene was used in place of 147 mg of 4,7-dibrmo-2,1,3-benzothiadiazole and 151 mg of 2,2'-(1,4-phenylene)bis(5,5-dimethyl-1,3,2-dioxaborinane) was used in place of 265 mg of 2,2-(9,9-dioctyl-9H-fluorene-2,7-diyl)bis(1,3,2-dioxaborola ne).
Mw: 94,000 g/mol, Mn: 33,000 g/mol

### Industrial Applicability

According to the method for production of the present invention, a conjugated polymer having high molecular weight can be produced.

## Claims

1. A method for production of a conjugated polymer comprising contacting (A) an aromatic monomer having at least two boron-containing functional groups with an aromatic monomer having at least two reactive functional groups or (B) aromatic monomers having at least one boron-containing functional group and at least one reactive functional group with each other, both in an ether solvent in the presence of a palladium catalyst wherein a phosphine compound is coordinated to palladium, cesium carbonate and 1 to 100 moles of water per 1 mole of the boron-containing functional group of the above-mentioned aromatic monomer.

2. The method for production of a conjugated polymer according to claim 1, wherein the ether solvent is an aliphatic ether solvent.

3. The method for production of a conjugated polymer according to claim 2, wherein the aliphatic ether solvent is tetrahydrofuran.

4. The method for production of a conjugated polymer according to any one of claims 1 to 3, wherein the phosphine compound is a phosphine compound wherein at least one alkyl group is bonded to a phosphorus atom.

5. The method for production of a conjugated polymer according to claim 4, wherein the phosphine compound wherein at least one alkyl group is bonded to a phosphorus atom is a trialkylphosphine represented by the formula (I): 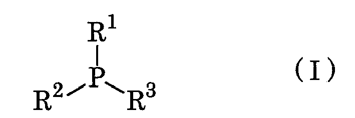 wherein R¹, R² and R³ each independently represents a C1-C30 alkyl group.

6. The method for production of a conjugated polymer according to claim 5, wherein the trialkylphosphine represented by the formula (I) is tricyclohexylphosphine.

7. The method for production of a conjugated polymer according to any one of claims 4 to 6, wherein the contact is conducted in the presence of 1 to 75 moles of water per 1 mole of the boron-containing functional group of the aromatic monomer.

8. The method for production of a conjugated polymer according to any one of claims 4 to 6, wherein the contact is conducted in the presence of 1 to 45 moles of water per 1 mole of the boron-containing functional group of the aromatic monomer.

9. The method for production of a conjugated polymer according to any one of claims 1 to 3, wherein the phosphine compound is a phosphine compound wherein three substituted or unsubstituted aryl groups are bonded to a phosphorus atom.

10. The method for production of a conjugated polymer according to claim 9, wherein the phosphine compound wherein three substituted or unsubstituted aryl groups are bonded to a phosphorus atom is a triarylphosphine represented by the formula (II): 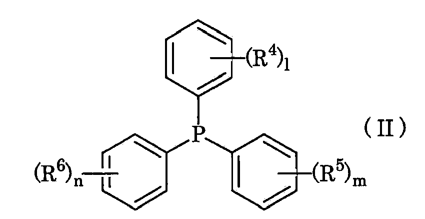 wherein R⁴, R⁵ and R⁶ each independently represents a halogen atom, a C1-C20 alkyl group, a C1-C20 alkoxy group or a C6-C20 aryl group, 1, m and n each independently an integer of 0 to 5, and when 1 represents an integer of 2 or more, R⁴s may be different from each other, when m represents an integer of 2 or more, R⁵s may be different from each other, and when n represents an integer of 2 or more, R⁶s may be different from each other.

11. The method for production of a conjugated polymer according to claim 10, wherein the phosphine compound represented by the formula (II) is triphenylphosphine or tris(4-methylphenyl)phosphine.

12. The method for production of a conjugated polymer according to any one of claims 9 to 11, wherein the contact is conducted in the presence of 1 to 25 moles of water per 1 mole of the boron-containing functional group of the aromatic monomer.

13. The method for production of a conjugated polymer according to claim 1, wherein the aromatic monomer having at least two boron-containing functional groups, the aromatic monomer having at least two reactive functional groups and the aromatic monomer having at least one boron-containing functional group and at least one reactive functional group is any of aromatic monomers represented by the formulae (1) to (16): 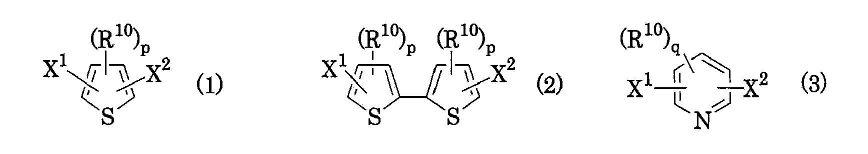 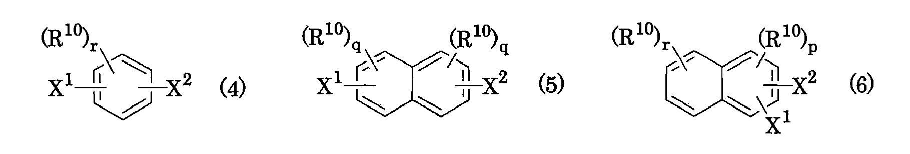 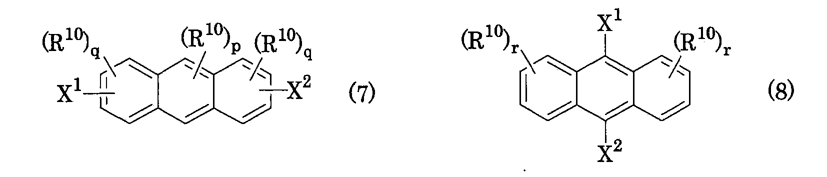 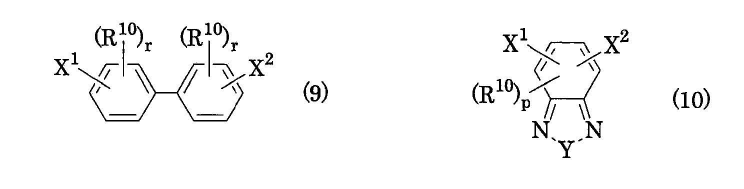 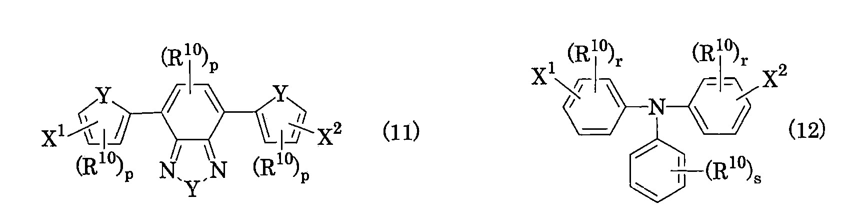 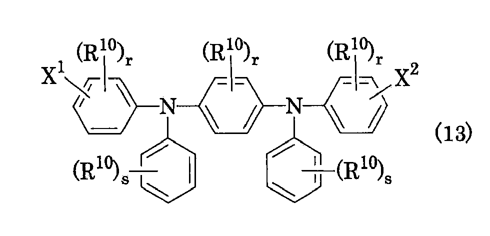 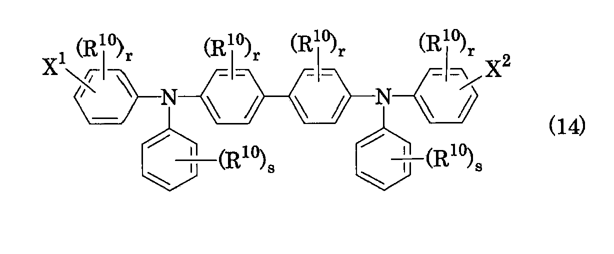 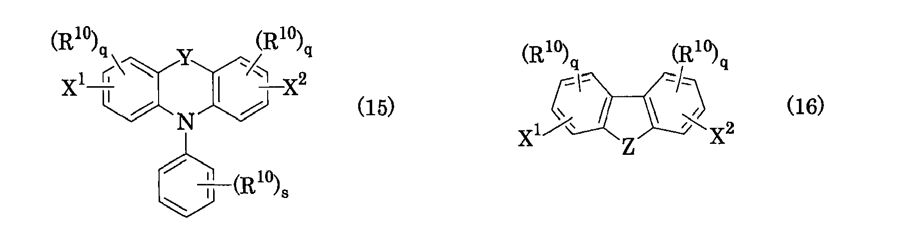 wherein X¹ and X² each independently represents a boron-containing functional group or a reactive functional group, R¹⁰ represents an uninvolved group in the reaction, p represents an integer of 0 to 2, q represents an integer of 0 to 3, r represents an integer of 0 to 4, s represents an integer of 0 to 5, and when multiple R¹⁰s exist, R¹⁰s may be different from each other, and two R¹⁰s bonded to the neighboring carbon atoms of the aromatic ring may be bonded each other to form a ring together with the carbon atoms to which they are bonded, Y represents an element of the 16 group in the periodic table, and Z represents -O-, -S-, -N(R²⁰)- or 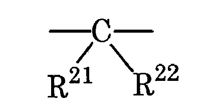 wherein R²⁰, R²¹ and R²² each independently represents a hydrogen atom or an uninvolved group in the reaction.

14. The method for production of a conjugated polymer according to claim 1 or 13, wherein the reactive functional group is a chlorine atom, a bromine atom or an iodine atom.

15. The method for production of a conjugated polymer according to claim 1 or 13, wherein the boron-containing functional group is any group of 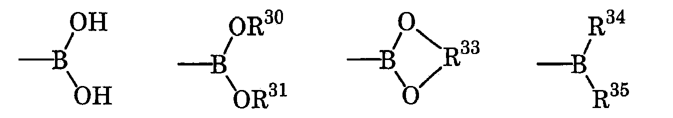 wherein R³⁰, R³¹, R³⁴ and R³⁵ each independently represents a C1-C6 substituted or unsubstituted alkyl group and R³³ represents a divalent hydrocarbon group.

16. The method for production of a conjugated polymer according to claim 15, wherein the divalent hydrocarbon group is a C2-C6 alkylene group.

17. The method for production of a conjugated polymer according to claim 16, wherein the C2-C6 alkylene group is an ethane-1,2-diyl group, a propane-1,3-diyl group, a 2,2-dimethylpropane-1,3-diyl group or a 2,3-dimethylbutane-2,3-diyl group.
